# EUROPÄISCHE PATENTSCHRIFT

(11) **EP 3 483 034 B1**
(45) Veröffentlichungstag und Bekanntmachung des Hinweises auf die Patenterteilung: **08.09.2021**
(21) Anmeldenummer: 18205744.8
(22) Anmeldetag: 12.11.2018
(51) Int. Cl.: B62B 3/06, B62B 3/10

(54) **FLURFÖRDERZEUG MIT PALETTENHALTER**
INDUSTRIAL TRUCK WITH PALLET HOLDER
CHARIOT DE MANUTENTION DOTÉ D'UN SUPPORT DE PALETTES

(30) Priorität: 13.11.2017 DE 102017126559
(43) Veröffentlichungstag der Anmeldung: 15.05.2019
(73) Patentinhaber: Jungheinrich Aktiengesellschaft, 22047 Hamburg (DE)
(72) Erfinder: Helbach, Aimo, 21379 Scharnebeck (DE); Helbach, Astrid, 21379 Scharnebeck (DE); Cohrs, Christian, 21449 Radbruch (DE)
(74) Vertreter: Hauck Patentanwaltspartnerschaft mbB

(56) Entgegenhaltungen:
- DE-A1-102012 112 428
- DE-A1-102013 010 656
- DE-A1-102015 113 169
- US-A1- 2003 025 050
- US-A1- 2015 035 259

## Beschreibung

Die Erfindung betrifft ein Flurförderzeug mit einem Antriebsteil und einem Lastteil, wobei das Lastteil eine Lastgabel und einen Gabelrahmen aufweist sowie einen an einem oberen Ende des Gabelrahmens angeordneten Palettenhalter zur Sicherung mindestens einer vertikal auf der Lastgabel stehenden Palette, wobei der Palettenhalter mindestens ein zwischen einer die mindestens eine Palette hintergreifenden Halteposition und einer die mindestens eine Palette freigebenden Freigabeposition verschwenkbar gelagertes Halteelement aufweist.

Ein Flurförderzeug mit einem derartigen Palettenhalter erlaubt die Mitnahme einer leeren Palette hochkant am Gabelrücken. Die leere Palettenmitnahme dient dazu, den Fahrzeugschwerpunkt und damit die Fahrstabilität mit einer vollen Palette auf langen Gabeln zu verbessern, da die volle Palette somit näher an der Hubeinheit aufgenommen werden kann. Ein solches Flurförderzeug verfügt üblicherweise über Lastgabeln, die derart lang sind, dass zwei horizontal hintereinander angeordnete Paletten auf den Lastgabeln aufgenommen werden können. Zunächst wird auf einer der Paletten Ware kommissioniert während die andere Palette hochkant stehend durch den Palettenhalter gehalten wird. Auf der vertikal stehenden Palette wird kommissioniert, sobald die erste Palette mit Ware gefüllt ist. Dazu wird die volle Palette auf der Lastgabel nach vorne geschoben und die Leerpalette nach vorn auf die Lastgabel gekippt.

Aus DE 10 2013 010 656 A1 ist ein Flurförderzeug mit einem Palettenhalter bekannt geworden. Der Palettenhalter ist im oberen Bereich des Lastteils angeordnet und als Haken bzw. Schnapphaken ausgebildet. Der die stehende Palette haltende Haken ist in seiner Halteposition verriegelt und kann mit Hilfe eines Entriegelungshebels in die Freigabeposition verschwenkt werden. Insbesondere kann der Haken in seiner die Palette sichernden Position federvorgespannt sein.

Aus DE 10 2015 113 169 A1 ist eine Weiterentwicklung des vorgenannten Palettenhalters bekannt geworden, wobei der Haken hier in Richtung der Längsachse des Flurförderzeugs bewegbar gelagert und in unterschiedlichen Längspositionen verstellbar ist. Durch diese Verstellbarkeit des Palettenhalters soll dieser an unterschiedlich bemaßte Paletten angepasst werden.

US 2003/0025050 A1 betrifft einen aus Draht geformten Haltebügel zum Halten einer Gasflasche an einem Gasgrill. US 2015/0035259 A1 erwähnt einen drahtartigen Haltebügel zum Halten eines Eimers an einem Transportkarren.

Der Erfindung liegt die Aufgabe zugrunde, bei einem Flurförderzeug der eingangs genannten Art den Bedienkomfort weiter zu verbessern und die Kommissioniervorgänge zeitlich zu optimieren.

Diese Aufgabe wird durch die Merkmale des Anspruchs 1 gelöst. Vorteilhafte Ausgestaltungen finden sich in den Unteransprüchen, der Beschreibung sowie den Figuren.

Bei dem erfindungsgemäßen Flurförderzeug ist das mindestens eine Halteelement als ein in die Halteposition vorgespannter, aus einem Draht geformter Haltebügel ausgebildet, wobei der Haltebügel zwei Schenkelabschnitte sowie einen die beiden Schenkelabschnitte verbindenden Halteabschnitt zum Hintergreifen der mindestens einen Palette umfasst.

Erfindungsgemäß ist also kein Haken, sondern mindestens ein Haltebügel als Halteelement des Palettenhalters vorgesehen. Der mindestens eine Haltebügel ist insbesondere einstückig aus einem Draht geformt und beispielsweise durch eine oder mehrere Federn in die Halteposition vorgespannt. Der mindestens eine Haltebügel kann dabei insbesondere um eine horizontale Achse verschwenkbar gelagert sein. In der Halteposition erstrecken sich die Schenkelabschnitte des mindestens einen Haltebügels von dem Gabelrahmen fort und bilden einen Aufnahmeraum zur Aufnahme einer oder mehrerer Paletten, wobei der die Schenkelabschnitte miteinander verbindende Halteabschnitt des Haltebügels die mindestens eine Palette hintergreift. Sollten durch den Haltebügel mehrere Paletten gehalten werden, so kann insbesondere vorgesehen sein, dass der Halteabschnitt nur die am weitesten außen liegende, also am weitesten von dem Gabelrahmen entfernte, Palette hintergreift. Der Halteabschnitt kann zum Hintergreifen der mindestens einen Palette mindestens einen Haltebereich aufweisen, der insbesondere flächig an der zu hintergreifenden Palette anliegt.

Der erfindungsgemäße Haltebügel ist - insbesondere gegenüber den eingangs genannten Haken - besonders leicht und elastisch ausgebildet. Der Haltebügel kann sich daher in gewissem Maße an durch den Palettenhalter aufgenommene Paletten anpassen, insbesondere verformen. Insbesondere kann der Haltebügel unterschiedlich bemaßte Paletten bzw. mehrere Paletten gleichzeitig sichern ohne dass eine Längenverstellung des Haltebügels nötig wäre. Der mindestens eine Haltebügel ist nicht längenverstellbar ausgebildet, sondern erstreckt sich über eine fixe von den Schenkelabschnitten definierte Länge. Der mindestens eine Haltebügel ist um eine Achse verschwenkbar auf welcher die Schenkelabschnitte mit ihren Enden gelagert sein können. Aufgrund seiner verschwenkbaren Lagerung kann der mindestens eine Haltebügel unterschiedliche Haltepositionen in unterschiedlichen Winkelstellungen gegenüber dem Gabelrahmen einnehmen. Insbesondere kann der mindestens eine Haltebügel aus einer Verstauposition an dem Gabelrahmen nach oben ausgeklappt werden. Insbesondere kann der mindestens eine Haltebügel auch in die Verstauposition an dem Gabelrahmen vorgespannt sein. In der Verstauposition ist der Haltebügel platzsparend verstaut und steht einer Bedienperson nicht im Weg. Ausgehend von der Verstauposition kann der mindestens ein Haltebügel bis in eine Freigabeposition verschwenkt werden, in welcher mindestens eine Palette vertikal auf der Lastgabel stehend an den Gabelrahmen gelehnt werden kann. Anschließend kann der mindestens ein Haltebügel durch seine Vorspannung in die Halteposition verschwenkt werden, in welcher er die mindestens eine Palette klemmend hält. Ist lediglich eine Palette aufgenommen, so kann der Haltebügel in der Halteposition in einem relativ kleinen Winkel zu dem Gabelrahmen stehen. Sollten mehrere oder anderweitige bemaßte Paletten aufgenommen sein, so kann der mindestens ein Haltebügel weiter vom Gabelrahmen ausgeklappt sein, seine Schenkelabschnitte also in einem größeren Winkel zum Gabelrahmen stehen. Der in die Halteposition vorgespannte Haltebügel passt sich so je nach Form, Größe und Anzahl der Paletten an diese an und hält diese klemmend. Insbesondere ist hierfür keine Längenverstellung des Haltebügels nötig, wie erwähnt. Die Ausführung des Halteelements als aus einem Draht geformter Haltebügel ist besonders elastisch und leicht und ermöglicht ein flexibles Halten einer unterschiedlichen Anzahl bzw. unterschiedlich bemaßter Paletten. Zudem ist die Herstellung einfacher als die der eingangs genannten hakenförmigen Halteelemente. Der Draht kann insbesondere eine Dicke im Bereich von 0,5 cm bis 3 cm, bevorzugt 1 cm, aufweisen.

Nach einer Ausgestaltung der Erfindung sind die Schenkelabschnitte an einer Welle angebracht, die federvorgespannt am Gabelrahmen drehbar gelagert ist. Die Welle ist dabei an einem oberen Ende des Gabelrahmens angeordnet und erstreckt sich insbesondere in einer horizontalen Ebene und senkrecht zu den Lastgabeln. Die Schenkelabschnitte des mindestens einen Haltebügels erstrecken sich in einer Ebene liegend von der Welle fort. Insbesondere können die Schenkelabschnitte parallel zueinander verlaufen. Die Verschwenkbarkeit des Haltebügels sowie die Vorspannung des Haltebügels in die Halteposition wird nach dieser Ausgestaltung also durch eine federvorgespannte Welle erreicht. Die Welle kann hierfür über eine oder mehrere Federn verfügen, die insbesondere an dem Gabelrahmen gegengelagert sind und bei einer Auslenkung des mindestens einen Haltebügels in die Freigabeposition komprimiert werden. Insbesondere kann der mindestens eine Haltebügel somit auch, wie oben bereits erläutert, in eine Verstauposition an dem Gabelrahmen vorgespannt sein. Sollten mehrere Haltebügel vorgesehen sein, so können insbesondere die Schenkelabschnitte aller Haltebügel mit der Welle verbunden sein. Auch kann vorgesehen sein, dass zumindest einer der Haltebügel nicht mit der Welle verbunden ist, wie weiter unten noch erläutert wird.

Nach einer Ausgestaltung sind die Schenkelabschnitte an ihrem wellenseitigen Ende abgewinkelt. Die wellenseitigen Enden bezeichnen hierbei die mit der oben genannten Welle verbundenen Endabschnitte der Schenkelabschnitte des mindestens einen Haltebügels. Die Schenkelabschnitte sind an ihrem wellenseitigen Ende dabei derart abgewinkelt, dass der mindestens eine Haltebügel in einer Verstauposition in den Gabelrahmen eingeklappt ist. Der mindestens eine Haltebügel kann somit besonders platzsparend verstaut werden.

Nach einer weiteren Ausgestaltung weist der Halteabschnitt des mindestens einen Haltebügels mindestens einen Haltebereich zum Hintergreifen der mindestens einen Palette auf, wobei der mindestens eine Haltebereich gegenüber den Schenkelabschnitten abgewinkelt ist. Die Schenkelabschnitte erstrecken sich hierbei insbesondere in einer ersten Ebene während sich der mindestens eine Haltebereich in einer zweiten Ebene erstreckt, die in einem Winkel zu der ersten Ebene steht. Der mindestens eine Haltebereich des Halteabschnitts kann somit eine aufgenommene Palette besonders sicher Hintergreifen. Der mindestens eine Haltebereich kann gegenüber der Erstreckungsebene der Schenkelabschnitte insbesondere in einem Winkel im Bereich von 30° bis 90°, bevorzugt 40° bis 80°, stehen.

Nach einer weiteren Ausgestaltung weist der mindestens eine Haltebereich zwei sich von den Schenkelabschnitten jeweils in einem Winkel forterstreckende Haltenasen auf. Die Haltenasen erstrecken sich folglich in der gegenüber der Erstreckungsebene der Schenkelabschnitte abgewinkelten Ebene. Die Haltenasen sind dabei durch einen Querabschnitt des Haltebügels miteinander verbunden, der parallel zu der Welle sowie insbesondere innerhalb der Erstreckungsebene der Schenkelabschnitte verläuft. Die Haltenasen bilden insbesondere gemeinsam mit dem Querabschnitt den Haltebereich. Aufgrund der Haltenasen ist der Haltebereich besonders stabil.

Nach einer Ausgestaltung weist der Halteabschnitt mindestens zwei Haltebereiche auf, wobei jeder der Haltebereiche zur Sicherung einer Palette ausgebildet ist. Der mindestens eine Haltebügel kann also zwei Haltebereiche umfassen, die der Sicherung jeweils mindestens einer Palette dienen. Die Haltebereiche können dabei jeweils in einem Winkel zu der Erstreckungsebene der Schenkelabschnitte stehen. Die Erstreckungsebenen der Haltebereiche können beispielsweise parallel zueinander sein. Insbesondere sind die Haltebereiche entlang der Schenkelabschnitte des Haltebügels versetzt zueinander angeordnet. Sind die Schenkelabschnitte an einer oben beschriebenen Welle am Gabelrahmen befestigt, so kann insbesondere einer der Haltebereiche weiter von der Welle entfernt sein als der andere. In der Halteposition des Haltebügels können die Haltebereiche jeweils zumindest eine Palette hintergreifen. Der mindestens eine Haltebügel kann somit mindestens zwei Paletten besonders sicher halten, da diese jeweils von einem Haltebereich unmittelbar hintergriffen werden. Beispielsweise kann ein erster Haltebereich durch zwei an den von der Welle abgewandten Enden der Schenkelabschnitte geformte Haltenasen gebildet sein, während ein zweiter Haltebereich durch einen die Haltenasen miteinander verbindenden Querabschnitt gebildet ist.

Erfindungsgemäß weist der Palettenhalter mindestens zwei ineinander verschwenkbare Haltebügel auf, wobei ein innerer Haltebügel zwischen einer eine erste Palette hintergreifenden Halteposition und einer die erste Palette freigebenden Freigabeposition verschwenkbar ist und ein äußerer Haltebügel zwischen einer eine zweite Palette hintergreifenden Halteposition und einer die zweite Palette freigebenden Freigabeposition verschwenkbar ist und die Haltebügel jeweils zwei Schenkelabschnitte sowie jeweils einen die beiden jeweiligen Schenkelabschnitte verbindenden Halteabschnitt zum Hintergreifen der jeweiligen Palette umfassen, wobei die Schenkelabschnitte des ersten Haltebügels und die Schenkelabschnitte des zweiten Haltebügels bevorzugt auf einer gemeinsamen Achse gelagert sind. Nach dieser Ausgestaltung sind folglich mindestens zwei Haltebügel vorgesehen. Jeder der Haltebügel dient dabei der Sicherung zumindest einer Palette. Hierfür kann jeder der Haltebügel jeweils einen Haltebereich aufweisen. Es kann jedoch auch einer der Haltebügel oder beide mehr als einen Haltebereich aufweisen, um mehr als eine Palette zu sichern. Der innere Haltebügel sowie der äußere Haltebügel können auf einer gemeinsamen Achse gelagert sein, wobei die Schenkelabschnitte des äußeren Haltebügels auf der Achse weiter außen liegen als die Schenkelabschnitte des inneren Haltebügels. Die gemeinsame Achse erstreckt sich dabei insbesondere senkrecht zu den Gabeln in einer horizontalen Ebene. Weiterhin können sich die Schenkelabschnitte des äußeren Haltebügels weiter von der Achse forterstrecken als die Schenkelabschnitte des inneren Haltebügels. Der innere Haltebügel ist somit innerhalb des äußeren Haltebügels um die Achse verschwenkbar. Die Schenkelabschnitte der Haltebügel können sich insbesondere parallel zueinander erstrecken. Zudem können die Haltebügel gemeinsam oder jeweils einzeln in ihrer Halteposition vorgespannt sein. Durch die mindestens zwei Haltebügel können zwei Paletten hintergriffen und somit besonders sicher gehalten werden. Zudem können zwei Paletten unabhängig voneinander in den Palettenhalter aufgenommen werden. So kann der innere Haltebügel sowie der äußere Haltebügel beispielsweise jeweils eine Palette halten. Soll die weiter außen liegende von dem äußeren Haltebügel gehaltene Palette von dem Palettenhalter entfernt werden, so muss lediglich der äußere Haltebügel in seine Freigabeposition verschwenkt werden.

Die weiter innen liegende, durch den inneren Haltebügel gehaltene Palette verbleibt dabei in ihrer gesicherten Position.

Nach einer weiteren Ausgestaltung ist der innere Haltebügel mit seinen Schenkelabschnitten an einer Welle angebracht, die federvorgespannt am Gabelrahmen drehbar gelagert ist und der äußere Haltebügel weist einen Mitnehmer auf, wobei durch ein Verschwenken des äußeren Haltebügels in die Freigabeposition der Mitnehmer den inneren Haltebügel entsprechend verschwenkt. Wie oben bereits erläutert, kann also zumindest einer der Haltebügel an einer Welle gelagert sein, wobei die Vorspannung in die Halteposition durch die an der Welle angeordnete Feder erreicht wird. Auf der gleichen Achse, jedoch nicht an der Welle, ist der äußere Haltebügel über seine Schenkelabschnitte gelagert. Wird nun der äußere Haltebügel beispielsweise von einer Verstauposition in die Freigabeposition verschwenkt, so nimmt der äußere Haltebügel über den Mitnehmer den inneren Haltebügel mit. Der äußere Haltebügel nutzt hierbei die Federkraft des inneren Haltebügels, also die der federvorgespannten Welle, aus. Wird lediglich der innere Haltebügel in seine Freigabeposition verschwenkt, so kann der äußere Haltebügel in seiner vorherigen Position verbleiben. Der Mitnehmer kann beispielsweise ein sich von einem oder beiden der Schenkelabschnitte des äußeren Haltebügels in Richtung des inneren Haltebügels erstreckendes Element sein, welches den inneren Haltebügel an dessen Schenkelabschnitt(en) angreift.

Nach einer weiteren Ausgestaltung weist der Halteabschnitt des inneren Haltebügels längstens zwei Haltebereiche auf und der Halteabschnitt des äußeren Haltebügels einen Haltebereich auf. Somit kann der innere Haltebügel zur Aufnahme zweier Paletten ausgebildet sein während der äußere Haltebügel zur Aufnahme einer Palette ausgebildet ist. Die Haltebereiche des inneren Haltebügels können dabei insbesondere zur Aufnahme unterschiedlich bemaßter Paletten bzw. unterschiedlicher Arten von Paletten, beispielsweise Holzpaletten oder Kunststoffpaletten, ausgebildet sein.

Die Erfindung wird im Folgenden anhand von Figuren erläutert. Es zeigen
- Figur 1: ein erfindungsgemäßes Flurförderzeug mit einem Antriebsteil und einem Lastteil,
- Figur 2: den Lastteil des Flurförderzeugs aus Figur 1 mitsamt eines Palettenhalters,
- Figur 3: den Palettenhalter des Lastteils aus Figur 2 in einer Detailansicht,
- Figur 4: den Palettenhalter aus Figur 3 mit einer aufgenommenen Holzpalette,
- Figur 5: den Palettenhalter aus Figur 3 mit einer aufgenommenen Kunststoffpalette, sowie
- Figur 6: den Palettenhalter aus Figur 3 mit zwei aufgenommenen Kunststoffpaletten.

Soweit nichts anderes angegeben ist, bezeichnen gleiche Bezugszeichen gleiche Gegenstände.

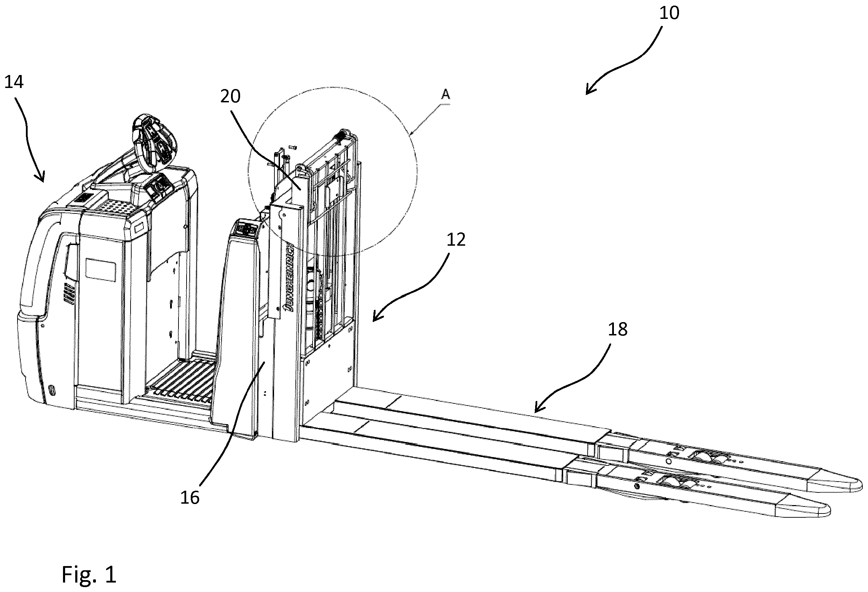

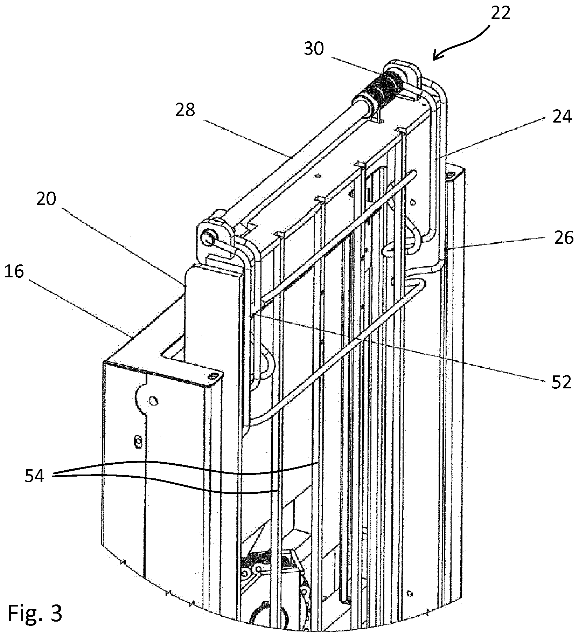

Figur 1 zeigt eine perspektivische Ansicht eines Horizontalkommissionierers 10 mit einem Lastteil 12 und einem Antriebsteil 14. Das Lastteil 12 ist mit einem rückwärtigen Rahmen 16 an dem Antriebsteil 14 bzw. dem entsprechenden Fahrzeugrahmen befestigt. An einem Gabelrahmen 20 ist eine Lastgabel 18 angebracht, die zwei parallel zueinander verlaufende, beabstandete Gabelarme umfasst. Die Lastgabel 18 ist dabei derart lang, dass zwei zum Kommissionieren übliche Paletten hintereinander in Längsrichtung aufgenommen werden können. An dem Rahmen 16 ist der Gabelrahmen 20 höhenverstellbar gelagert. Der Gabelrahmen 20 kann mithilfe einer nicht dargestellten Hydraulik angehoben werden. Wie insbesondere Figur 3 zu entnehmen, weist der Gabelrahmen 20 an der der Lastgabel 18 zugekehrten Seite parallel zueinander beabstandete, vertikale Rippen 54 auf, die der Stabilisierung sowie als Prallschutz beim Aufnehmen einer Palette dienen.

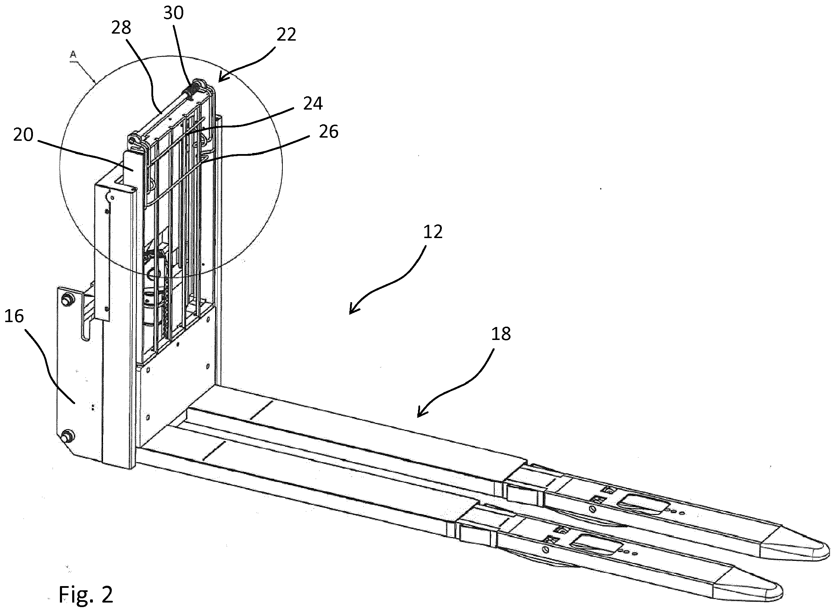

In Figur 2 ist der Lastteil 12 des Flurförderzeugs 10 separat dargestellt. Hierbei ist ersichtlich, dass der Gabelrahmen 20 an seinem oberen Ende einen Palettenhalter 22 umfasst. Der Palettenhalter 22 weist zwei aus jeweils einem Draht geformte Haltebügel 24, 26 auf, wobei der Haltebügel 24 an einer Welle 28 gelagert ist. Über eine Feder 30 der Welle 28 sind die Haltebügel 24,26 in ihre Haltepositionen vorgespannt, wie später noch erläutert wird.

Die Figuren 3 bis 6 zeigen eine Detailansicht des Palettenhalters 22, die in Figur 2 mit einem mit A gekennzeichneten Kreis angedeutet ist. Hierbei ist ersichtlich, dass der innere Haltebügel 24 zwei zueinander parallele Schenkelabschnitte 32 aufweist, die mit einem Ende mit der Welle 28 verbunden sind und sich von dieser forterstrecken. An den von der Welle 28 abgewandten Enden der Schenkelabschnitte 32 sind jeweils Haltenasen 36 ausgeformt, die einen ersten Haltebereich des inneren Haltebügels 24 bilden. Ausgehend von den Haltenasen 36 erstreckt sich der Draht des inneren Haltebügels 24 in einer geschwungenen Form wiederum zurück in Richtung der Welle 28. Ein sich parallel zu der Welle 28 erstreckender Querabschnitt 38 verbindet die beiden Haltenasen 36 miteinander und bildet gemeinsam mit zwei vertikal zu diesem stehenden Fortsätzen 39 einen zweiten Haltebereich. Der durch die Haltenasen 36 gebildete erste Haltebereich sowie der durch den Querabschnitt 38 sowie die Fortsätze 39 gebildete zweite Haltebereich sind Teil eines Halteabschnitts 34 des inneren Haltebügels 24. Weiterhin weist der innere Haltebügel 24 an seinen wellenseitigen Enden zwei Abwinkelungen 40 auf.

Der äußere Haltebügel 26 weist ebenfalls zwei zueinander parallele Schenkelabschnitte 42 auf. Diese sind mit einem Ende auf der Achse A außerhalbe der Welle 28 drehbar gelagert und erstrecken sich von dieser Achse fort. An den von der Achse A abgewandten Enden der Schenkelabschnitte 42 sind jeweils Haltenasen 46 ausgeformt, die gemeinsam mit einem die Haltenasen 46 verbindenden Querabschnitt 48 einen Haltebereich des äußeren Haltebügels 26 bilden. Der durch die Haltenasen 46 sowie den Querabschnitt 48 gebildete Haltebereich ist Teil eines Halteabschnitts 44. Weiterhin weist auch der äußere Haltebügel 26 an seinen wellenseitigen Enden zwei Abwinkelungen 50 auf.

In Figur 2 sind die Haltebügel 24, 26 in ihren Verstaupositionen dargestellt. Hierbei sind die Haltebügel 24, 26 an bzw. in dem Gabelrahmen 20 eingeklappt. Ein derartig kompaktes Verstauen wird insbesondere aufgrund der abgewinkelten Schenkelabschnitte 40, 50 der Haltebügel 24, 26 erreicht. Die Haltebügel 24, 26 werden durch die Feder 30 der Welle 28 in diese Verstauposition vorgespannt. Die Feder 30 ist an dem Gabelrahmen gegengelagert. Zum Verstellen der Haltebügel 24, 26 in die Freigabe- bzw. Haltepositionen müssen diese beispielsweise durch eine Bedienperson aus der Verstauposition entgegen der Federkraft verschwenkt werden.

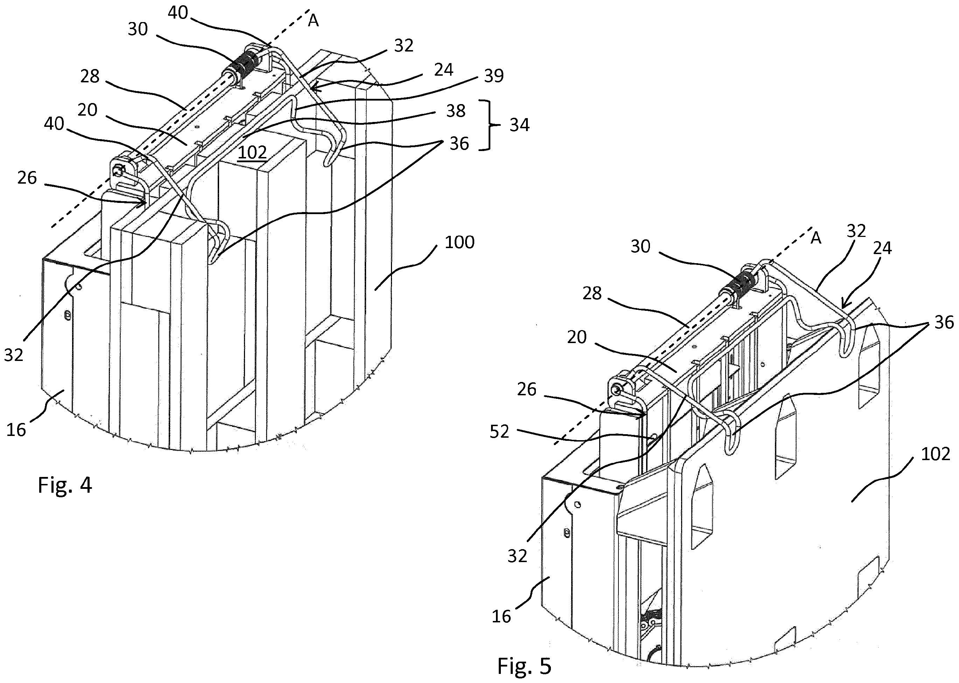

Der innere Haltebügel 24 ist aufgrund seiner zwei Haltbereiche 36, 38 zur Sicherung zweier unterschiedlicher Palettenarten ausgebildet. Der zweite Haltebereich 38 dient dem Hintergreifen einer Euro-Holzpalette 100, wie in Figur 4 zu erkennen. Hierbei liegen die Fortsätze 39 an der Unterseite der Holzpalette an während der Querabschnitt 38 sich oberhalb eines Palettenzwischenblocks 102 erstreckt. Aufgrund der Federvorspannung des Haltebügels 24 durch die Feder 30 wird der innere Haltebügel 24 vorgespannt und klemmt somit die Palette 100 an den Gabelrahmen 20 bzw. den rückwärtigen Rahmen 16. Zur Aufnahme der Holzpalette 100 wurde der innere Haltebügel 24 zuvor aus seiner in Figur 3 dargestellten Verstauposition entgegen der Federkraft der Feder 30 um die Drehachse A in seine Freigabeposition verschwenkt.

In Figur 5 ist ersichtlich, wie der innere Haltebügel 24 eine Kunststoffpalette 102 mit seinem durch die Haltenasen 36 gebildeten ersten Haltebereich hintergreift. Aufgrund der Vorspannung des Haltebügels 24 hält der Haltebügel 24 die Palette 102 klemmend an dem Gabelrahmen 20 bzw. an dem rückwärtigen Rahmen 16. Auch in diesem Fall wurde zur Aufnahme der Palette 102 in den Palettenhalter 22 der innere Haltebügel 24 zunächst ausgehend von seiner Verstauposition entgegen der Federkraft der Feder 30 in die Freigabeposition verschwenkt und anschließend losgelassen. Wie im Vergleich gegenüber Figur 4 zu erkennen, ist der innere Haltebügel 24 in Figur 5 weiter ausgelenkt, die Schenkelabschnitte 32 schließen mit dem Gabelrahmen 20 also einen größeren Winkelbereich ein. Aufgrund der Abwinkelung der Haltebereiche 36, 38 gegenüber der Erstreckungsebene der Schenkelabschnitte 32 werden die Paletten 100 bzw. 102 besonders sicher hintergriffen.

In den Figuren 4 und 5 ist lediglich der innere Haltebügel 24 im Einsatz, während der äußere Haltebügel 26 in seiner Verstauposition am Gabelrahmen 20 verbleibt.

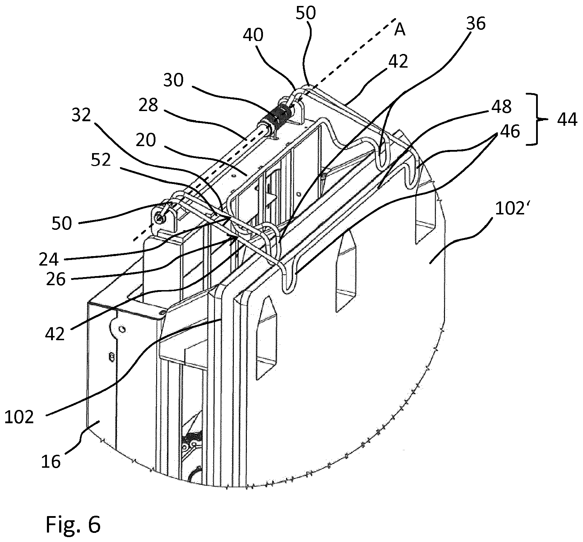

Figur 6 zeigt den Palettenhalter 22 mit zwei darin aufgenommenen Kunststoffpaletten 102, 102'. Hierbei ist sowohl der innere Haltebügel 24 wie auch der äußere Haltebügel 26 im Einsatz. Der innere Haltebügel 24 hält die innere Kunststoffpalette 102 wie bereits zu Figur 5 beschrieben. Gegenüber Figur 5 ist in Figur 6 auch der äußere Haltebügel 26 aus seiner Verstauposition ausgelenkt und hintergreift mit seinen Haltenasen 46 die äußere Kunststoffpalette 102'. Vor Aufnahme der Paletten 102, 102' in den Palettenhalter 22 wurde der äußere Haltebügel 26 aus der Verstauposition in eine Freigabeposition verschwenkt, wobei über einen an einem der Schenkelabschnitte 42 angeordneten Mitnehmer 52 auch der innere Haltebügel 24 mitgenommen wurde. Der innere Haltebügel 24 ist mit seinen Schenkelabschnitten 32, wie erläutert, an der federvorgespannten Welle 28 befestigt. Der äußere Haltebügel 26 ist über seine Schenkelabschnitte 42 zwar auf der gleichen Achse A jedoch außerhalb der Welle 28 drehbar am Gabelrahmen 20 gelagert. In der in Figur 6 dargestellten Halteposition drückt der innere Haltebügel 24 mit einem seiner Schenkelabschnitte 32 aufgrund der Federvorspannung auf den Mitnehmer 52 und spannt so auch den äußeren Haltebügel 26 in die Halteposition vor. In diesem Ausführungsbeispiel wird somit die Federkraft der Feder 30 für beide Haltebügel 24, 26 ausgenutzt.

Mit dem hier dargestellten Palettenhalter können einfacher Weise, insbesondere ohne eine Längenverstellung der Haltebügel, unterschiedliche Arten von Paletten sowie unterschiedliche Anzahlen von Paletten sicher gehalten werden. Die Haltebügel sind hierbei jeweils einstückig aus einem Draht geformt und daher trotz großer Flexibilität sehr stabil.

### Bezugszeichenliste

- 10: Flurförderzeug
- 12: Lastteil
- 14: Antrieb steil
- 16: rückwärtiger Rahmen
- 18: Lastgabel
- 20: Gabelrahmen
- 22: Palettenhalter
- 24: innerer Haltebügel
- 26: äußerer Haltebügel
- 28: Welle
- 30: Feder
- 32: Schenkelabschnitte des inneren Haltebügels
- 34: Halteabschnitt des inneren Haltebügels
- 36: Haltenasen des inneren Haltebügels
- 38: Querabschnitt des inneren Haltebügels
- 39: Fortsätze
- 40: abgewinkelte Schenkelabschnitte des inneren Haltebügels
- 42: Schenkelabschnitte des äußeren Haltebügels
- 44: Halteabschnitt des äußeren Haltebügels
- 46: Haltebereich, Haltenasen des äußeren Haltebügels
- 48: Querabschnitt des äußeren Haltebügels
- 50: abgewinkelte Schenkelabschnitte des äußeren Haltebügels
- 52: Mitnehmer
- 54: Längs streben
- 100: Holzpalette
- 102: Palettenzwischenblock
- 102: Kunststoffpalette
- 102': Kunststoffpalette

## Patentansprüche

1. Flurförderzeug mit einem Antriebsteil (14) und einem Lastteil (12), wobei das Lastteil (12) eine Lastgabel (18) und einen Gabelrahmen (20) aufweist sowie einen an einem oberen Ende des Gabelrahmens (20) angeordneten Palettenhalter (22) zur Sicherung mindestens einer vertikal auf der Lastgabel (18) stehenden Palette (100, 102, 102'), wobei der Palettenhalter (22) mindestens ein zwischen einer die mindestens eine Palette (100, 102, 102') hintergreifenden Halteposition und einer die mindestens eine Palette (100, 102, 102') freigebenden Freigabeposition verschwenkbar gelagertes Halteelement (24, 26) aufweist, wobei das mindestens eine Halteelement (24, 26) in die Halteposition vorgespannt ist,
**dadurch gekennzeichnet, dass**
als Halteelemente (24, 26) mindestens zwei ineinander verschwenkbare, aus Draht geformte Haltebügel (24, 26) vorgesehen sind, wobei ein innerer Haltebügel (24) zwischen einer eine erste Palette (100, 102) hintergreifenden Halteposition und einer die erste Palette (100, 102) freigebenden Freigabeposition verschwenkbar ist und ein äußerer Haltebügel (26) zwischen einer eine zweite Palette (102') hintergreifenden Halteposition und einer die zweite Palette (102') freigebenden Freigabeposition verschwenkbar ist und die Haltebügel (24, 26) jeweils zwei Schenkelabschnitte (32, 42) sowie jeweils einen die beiden jeweiligen Schenkelabschnitte (32, 42) verbindenden Halteabschnitt (34, 44) zum Hintergreifen der jeweiligen Palette (100, 102, 102') umfassen.

2. Flurförderzeug nach Anspruch 1, **dadurch gekennzeichnet, dass** die Schenkelabschnitte (32, 42) zumindest eines Haltebügels (24, 26) an einer Welle (28) angebracht sind, die federvorgespannt am Gabelrahmen (20) drehbar gelagert ist.

3. Flurförderzeug nach Anspruch 2, **dadurch gekennzeichnet, dass** die Schenkelabschnitte (32, 42) an ihrem wellenseitigen Ende (40, 50) abgewinkelt sind.

4. Flurförderzeug nach einem der vorhergehenden Ansprüche, **dadurch gekennzeichnet, dass** der Halteabschnitt (34, 44) zumindest eines Haltebügels (24, 26) mindestens einen Haltebereich (36, 38, 46) zum Hintergreifen der mindestens einen Palette (100, 102, 102') aufweist, der gegenüber den Schenkelabschnitten (32, 42) abgewinkelt ist.

5. Flurförderzeug nach Anspruch 4, **dadurch gekennzeichnet, dass** der mindestens eine Haltebereich (36, 46) zwei sich von den Schenkelabschnitten (32, 42) jeweils in einem Winkel forterstreckende Haltenasen aufweist.

6. Flurförderzeug nach Anspruch 4 oder 5, **dadurch gekennzeichnet, dass** der Halteabschnitt (34) mindestens zwei Haltebereiche (36, 38) aufweist, wobei jeder der Haltebereiche (36, 38) zur Sicherung einer Palette (102, 102') ausgebildet ist.

7. Flurförderzeug nach einem der vorhergehenden Ansprüche, **dadurch gekennzeichnet, dass** die Schenkelabschnitte (32) des inneren Haltebügels (24) und die Schenkelabschnitte (42) des äußeren Haltebügels (26) auf einer gemeinsamen Achse (A) gelagert sind.

8. Flurförderzeug nach einem der vorhergehenden Ansprüche, **dadurch gekennzeichnet, dass** der innere Haltebügel (24) mit seinen Schenkelabschnitten (32) an einer Welle (28) angebracht ist, die federvorgespannt am Gabelrahmen (20) drehbar gelagert ist, und dass der äußere Haltebügel (26) einen Mitnehmer (52) aufweist, wobei durch ein Verschwenken des äußeren Haltebügels (26) in die Freigabeposition der Mitnehmer (52) den inneren Haltebügel (24) entsprechend verschwenkt.

9. Flurförderzeug nach einem der vorhergehenden Ansprüche, **dadurch gekennzeichnet, dass** der Halteabschnitt (34) des inneren Haltebügels (24) mindestens zwei Haltebereiche (36, 38) aufweist und dass der Halteabschnitt (44) des äußeren Haltebügels (26) einen Haltebereich (46) aufweist.

## Claims

1. An industrial truck comprising a drive part (14) and a load part (12), wherein the load part (12) comprises a load fork (18) and a fork frame (20) as well as a pallet holder (22) arranged at an upper end of the fork frame (20) for securing at least one pallet (100, 102, 102') standing vertically on the load fork (18), wherein the pallet holder (22) comprises at least one holding element (24, 26) that is mounted so as to be pivotable between a holding position, in which it engages behind the at least one pallet (100, 102, 102'), and a release position, in which it releases the at least one pallet (100, 102, 102'), wherein the at least one holding element (24, 26) is preloaded into the holding position,
**characterized in that**
at least two holding bars (24, 26) that can pivot one into the other and that are formed from wire are provided as the holding elements (24, 26), wherein an inner holding bar (24) can be pivoted between a holding position, in which it engages behind a first pallet (100, 102), and a release position, in which it releases the first pallet (100, 102), and an outer holding bar (26) can be pivoted between a holding position, in which it engages behind a second pallet (102'), and a release position, in which it releases the second pallet (102'), and the holding bars (24, 26) each comprise two leg portions (32, 42) and one holding portion (34, 33) that connects the two respective leg portions (32, 43) for engaging behind the relevant pallet (100, 102, 102').

2. The industrial truck according to claim 1, **characterized in that** the leg portions (32, 42) of at least one holding bar (24, 26) are attached to a shaft (28) that is mounted in a spring-preloaded manner on the fork frame (20) so as to be rotatable.

3. The industrial truck according to claim 2, **characterized in that** the leg portions (32, 42) are angled at their shaft-side end (40, 50).

4. The industrial truck according to any one of the preceding claims, **characterized in that** the holding portion (34, 44) of at least one holding bar (24, 26) comprises at least one holding region (36, 38, 46) that is angled with respect to the leg portions (32, 42) for engaging behind the at least one pallet (100, 102, 102').

5. The industrial truck according to claim 4, **characterized in that** the at least one holding region (36, 46) comprises two holding projections that each extend at an angle from the leg portions (32, 42).

6. The industrial truck according to claim 4 or 5, **characterized in that** the holding portion (34) comprises at least two holding regions (36, 38), wherein each of the holding regions (36, 38) is designed to secure a pallet (102, 102').

7. The industrial truck according to any one of the preceding claims, **characterized in that** the leg portions (32) of the inner holding bar (24) and the leg portions (42) of the outer holding bar (26) are mounted on a common axis (A).

8. The industrial truck according to any one of the preceding claims, **characterized in that** the inner holding bar (24) is attached by its leg portions (32) to a shaft (28) that is mounted on the fork frame (20) in a spring-preloaded manner so as to be rotatable, and **in that** the outer holding bar (26) comprises a catch (52), wherein, by pivoting the outer holding bar (26) into the release position, the catch (52) pivots the inner holding bar (24) in a corresponding manner.

9. The industrial truck according to any one of the preceding claims, **characterized in that** the holding portion (34) of the inner holding bar (24) comprises at least two holding regions (36, 38) and **in that** the holding portion (44) of the outer holding bar (26) comprises one holding region (46).

## Revendications

1. Chariot de manutention doté d'une partie d'entraînement (14) et d'une partie de charge (12), dans lequel la partie de charge (12) présente une fourche de chargement (18) et un cadre de fourche (20) ainsi qu'un support de palettes (22) disposé à une extrémité supérieure du cadre de fourche (20) pour sécuriser au moins une palette (100, 102, 102') disposée verticalement sur la fourche de chargement (18), dans lequel le support de palettes (22) présente un élément de maintien (24, 26) monté de façon pivotante entre une position de maintien venant en prise derrière l'au moins une palette (100, 102, 102') et une position de libération libérant l'au moins une palette (100, 102, 102'), dans lequel l'au moins un élément de maintien (24, 26) est précontraint dans la position de maintien,
**caractérisé en ce que**
il est prévu au moins deux étriers de maintien (24, 26) constitués de fil de fer, aptes à pivoter l'un dans l'autre, dans lequel un étrier de maintien intérieur (24) peut pivoter entre une position de maintien venant en prise derrière une première palette (100, 102) et une position de libération libérant la première palette (100, 102) et un étrier de maintien extérieur (26) peut pivoter entre une position de maintien venant en prise derrière la deuxième palette (102') et une position de libération libérant la deuxième palette (102'), et les étriers de maintien (24, 26) comportent respectivement deux sections de jambe (32, 42) et respectivement une section de maintien (34, 44) reliant les deux sections de jambe (32, 42) respectives pour venir en prise derrière la palette (100, 102, 102') respective.

2. Chariot de manutention selon la revendication 1, **caractérisé en ce que** les sections de jambe (32, 42) d'au moins un étrier de maintien (24, 26) sont fixées à un arbre (28) monté de façon rotative sur le cadre de fourche (20) en étant précontraints par ressort.

3. Chariot de manutention selon la revendication 2, **caractérisé en ce que** les sections de jambe (32, 42) sont coudées au niveau de leur extrémité côté arbre (40, 50).

4. Chariot de manutention selon l'une des revendications précédentes, **caractérisé en ce que** la section de maintien (34, 44) d'au moins un étrier de maintien (24, 26) présente une région de maintien (36, 38, 46) destinée à venir en prise derrière l'au moins une palette (100, 102, 102'), laquelle est coudée par rapport aux sections de jambe (32, 42).

5. Chariot de manutention selon la revendication 4, **caractérisé en ce que** l'au moins une région de maintien (36, 46) présente deux nez de maintien s'étendant à distance des sections de jambe (32, 42) en formant respectivement un angle.

6. Chariot de manutention selon la revendication 4 ou 5, **caractérisé en ce que** la section de maintien (34) présente au moins deux régions de maintien (36, 38), dans lequel chacune des régions de maintien (36, 38) est conçue pour sécuriser une palette (102, 102').

7. Chariot de manutention selon l'une des revendications précédentes, **caractérisé en ce que** les sections de jambe (32) de l'étrier de maintien intérieur (24) et les sections de jambe (42) de l'étrier de maintien extérieur (26) sont montées sur un axe commun (A).

8. Chariot de manutention selon l'une des revendications précédentes, **caractérisé en ce que** l'étrier de maintien intérieur (24) est fixé à un arbre (28) avec ses sections de jambe (32), lequel est monté de façon rotative sur le cadre de fourche (20) en étant précontraint par ressort, et **en ce que** l'étrier de maintien extérieur (26) présente un entraîneur (52), un pivotement de l'étrier de maintien extérieur (26) vers la position de libération amenant l'entraîneur (52) à faire pivoter l'étrier de maintien intérieur (24) de façon correspondante.

9. Chariot de manutention selon l'une des revendications précédentes, **caractérisé en ce que** la section de maintien (34) de l'étrier de maintien intérieur (24) présente au moins deux régions de maintien (36, 38) et **en ce que** la section de maintien (44) de l'étrier de maintien extérieur (26) présente une région de maintien (46).
